# EUROPÄISCHE PATENTSCHRIFT

(11) **EP 3 199 570 B1**
(45) Veröffentlichungstag und Bekanntmachung des Hinweises auf die Patenterteilung: **21.03.2018**
(21) Anmeldenummer: 16152742.9
(22) Anmeldetag: 26.01.2016
(51) Int. Cl.: C08G 77/08, C08G 77/18

(54) **VERFAHREN ZUR HERSTELLUNG EINER 2-ETHYLHEXYLSILIKAT-HALTIGEN ZUSAMMENSETZUNG**
METHOD FOR PRODUCING A COMPOSITION CONTAINING 2-ETHYL HEXYLSILICATE
PROCEDE ET FABRICATION D'UNE COMPOSITION CONTENANT DU SILICATE D'ETHYLE 2-HEXYL

(43) Veröffentlichungstag der Anmeldung: 02.08.2017
(73) Patentinhaber: Evonik Degussa GmbH, 45128 Essen (DE)
(72) Erfinder: KRAFCZYK, Roland, 79618 Rheinfelden (DE); STANDKE, Burkhard, 79540 Lörrach (DE); KÖPFER, Alexander, 79669 Zell im Wiesental (DE); ERHARDT, Sascha, 79730 Murg (DE)

(56) Entgegenhaltungen:
- EP-A1- 1 035 184

## Beschreibung

Die vorliegende Erfindung betrifft eine Zusammensetzung mit einem sehr hohen Anteil an 2-Ethylhexylsilikat sowie ein spezielles Verfahren zu deren Herstellung, wobei man Ethylsilikat in Gegenwart eines nicht sauren Katalysators mit 2-Ethylhexanol umestert und anschließend den freien Alkohol aus dem Reaktionsgemisch entfernt.

Polykieselsäurealkylester, auch Alkylsilikate genannt, können nach chemischem Verständnis unter anderem durch allgemeine Formeln wie RO-[(RO-)₂Si-O]ₙ-R sowie [-Si(-OR)₂O_{2/2}-]ₙ mit n>1 und R=Alkyl wiedergegeben werden und sind als solche lange bekannt, beispielsweise in Form von so genanntem Ethylsilikat.

DE-AS-1010739 lehrt die Herstellung von Polykieselsäureestern durch Umsetzung von Tetraethoxysilan mit höheren Alkoholen wie Cyclohexanol, Methylcyclohexanol sowie Phenolen in Gegenwart einer wasserfreien oder wässrigen Carbonsäure als Kondensationsmittel, beispielsweise Essig- oder Ameisensäure. Die bei der Umsetzung entstehenden flüchtigen Verbindungen, wie niederer Alkohol, wurden abdestilliert. Das Produkt ist säurehaltig.

US 2846459 offenbart die Herstellung bromierter Alkylsilikate durch Umesterung, wobei in den Beispielen von Polykieselsäureethylester ausgegangen und dieser u.a. mit einem Gemisch aus 2,3-Dibrompropan-1-ol und 2-Ethylhexanol umgesetzt wurde. Dabei kamen Natriummethanolat bzw. ein Gemisch aus Natriummethanolat und Kaliumcarbonat als Katalysator zum Einsatz. Auch hier wurden die nach der Umsetzung noch leicht flüchtigen Verbindungen, wie niederer Alkohol, abdestilliert und so entsprechende bromierte Alkylsilikate erhalten.

Aus Beispiel 7 der EP1035184A1 ist die Umsetzung von 100 g Ethylsilikat mit 18 g 2-Ethylhexanol in Gegenwart von Schwefelsäure als Katalysator zu entnehmen. Die Umsetzung erfolgte über 1 Stunde bei 120 °C. Die danach noch vorliegenden leicht flüchtigen Bestandteile wurden abdestilliert. Dabei wurde ein Alkylsilikat erhalten, das noch einen Gehalt von 94 Mol-% Ethyl und ein Molekulargewichtgewicht von 1750 g/mol aufwies. Hier erfolgte nur eine Teilumesterung mit geringer Ausbeute und das Produkt ist darüber hinaus aufgrund der eingesetzten und im Produkt verbleibenden Restmenge an Schwefelsäure sauer. Die Weiterverarbeitung des Produkts erfolgte in THF.

Der vorliegenden Erfindung lag daher die Aufgabe zugrunde, eine 2-Ethylhexylsilikat-haltige Zusammensetzung einschließlich eines geeigneten Herstellverfahrens bereitzustellen, wobei Ethylsilikat (Polykieselsäureethylester) mit 2-Ethylhexanol in Gegenwart eines nicht sauren Katalysators mit möglichst hoher Ausbeute umgeestert werden soll.

Die gestellt Aufgabe wird erfindungsgemäß entsprechend den Merkmalen in den hier vorliegenden Ansprüchen vorteilhaft gelöst.

So wurde in überraschender Weise ein spezielles Verfahren zur Herstellung einer 2-Ethylhexylsilikat-haltigen Zusammensetzung gefunden, indem man Ethylsilikat, einen dazu gewichtsbezogenen Überschuss an 2-Ethylhexanol und eine katalytische Menge an Titantetrabutanolat zusammenbringt, das Eduktgemisch unter Durchmischung auf eine Temperatur unterhalb des Siedepunkts von 2-Ethylhexanol aufheizt, reagieren lässt und im Anschluss an die Umsetzung Ethanol und überschüssiges 2-Ethylhexanol durch Destillation aus dem so erhaltenen Reaktions- bzw. Produktgemisch entfernt und man die erfindungsgemäße Zusammensetzung als Sumpfprodukt nach Destillation in hervorragender Ausbeute gewinnt. Darüber hinaus ist die erfindungsgemäße Zusammensetzung nicht sauer und enthält vorteilhaft einen Gehalt an 2-Ethylhexylsilikat von ≥90 Gew.-% sowie einen Gehalt an freiem Ethanol von ≤ 1 Gew.-%, jeweils bezogen auf die Zusammensetzung.

Gegenstand der vorliegenden Erfindung ist somit ein Verfahren zur Herstellung einer 2-Ethylhexylsilikat-haltigen Zusammensetzung, indem man Ethylsilikat mit einer im Überschuss eingesetzten Menge an 2-Ethylhexanol in Gegenwart von Titantetrabutanolat als Katalysator unter Durchmischung auf eine Temperatur unterhalb des Siedepunkts von 2-Ethylhexanol erhitzt, reagieren lässt und im Anschluss an die Umsetzung Ethanol und überschüssiges 2-Ethylhexanol durch Destillation aus dem Reaktionsgemisch entfernt und man das Produkt gewinnt.

Vorteilhaft setzt man beim erfindungsgemäßen Verfahren Ethylsilikat und 2-Ethylhexanol in einem Gewichtsverhältnis von 1 : 1,1 bis 10, bevorzugt 1 : 1,5 bis 3, besonders bevorzugt 1 : 2 ein.

Ferner setzt man beim erfindungsgemäßen Verfahren vorteilhaft 0,01 bis 0,5 Gew.-%, bevorzugt von 0,01 bis 0,1 Gew.-%, besonders bevorzugt 0,05 Gew.-%, Titantetrabutanolat, bezogen auf die eingesetzte Menge an 2-Ethylhexylsilikat, ein.

Geeigneterweise führt man beim erfindungsgemäßen Verfahren die Umsetzung bei einer Temperatur von 140 bis 182 °C, bevorzugt von 170 bis 181 °C, besonders bevorzugt bei 180 °C, und über einen Zeitraum von 12 bis 60 Stunden, bevorzugt von 16 bis 48 Stunden durch.

Im Allgemeinen führt man das erfindungsgemäße Verfahren wie folgt durch:
In der Regel legt man ein Gemisch aus Ethylsilikat und einem diesbezüglichen gewichtsmäßigen Überschuss an 2-Ethylhexanol sowie einer katalytischen Menge an Titantetrabutanolat in einer geeigneten Reaktionsapparatur (zum Beispiel Reaktionsgefäß mit Zuführungen zur Eduktdosierung, Rührer, Heizung, Temperaturkontrolle/-regelung, Rückflusskühler und Brücke mit Vorlage) vor, erhitzt das Gemisch unter Rühren bevorzugt auf eine Temperatur knapp unterhalb des Siedepunkts von 2-Ethylhexanol, insbesondere bei einer Temperatur im Bereich von 180 °C, lässt das Gemisch hinreichend lange reagieren, vorzugsweise von 12 bis 48 Stunden, und destilliert geeigneterweise anschließend die im so erhaltenen Reaktions- bzw. Produktgemisch noch vorliegenden leicht flüchten Komponenten wie Ethanol sowie überschüssiges 2-Ethylhexanol ab, um das Reaktions- bzw. Produktgemisch mittels Destillation aufzuarbeiten und so das Produkt zu gewinnen. Beispielsweise kann man zur Durchführung der Destillation das nach Umsetzung vorliegende Reaktions- bzw. Produktgemisch aus dem Reaktionsgefäß in eine gesonderte Destillationseinheit überführen und mittels Destillation aufarbeiten. Darüber hinaus kann man zum Ende der Destillation Vakuum anlegen, das heißt, unter vermindertem Druck destillieren, und/oder zusätzlich Stickstoff durch das im Sumpf der Destillationsapparatur befindliche Produkt bzw. Produktgemisch leiten. Das Produkt, die erfindungsgemäße Zusammensetzung, gewinnt man somit vorteilhaft als farblos bis gelbliche, leicht viskose Flüssigkeit im Sumpf der verwendeten Destillationsapparatur.

Überraschend erzielt man bei der Durchführung des erfindungsgemäßen Verfahrens in besonders vorteilhafter Weise eine nahezu vollständige Umesterung mit einer Ausbeute von ≥ 95 % und ist somit in die günstige Lage versetzt, ein entsprechendes Reaktionsprodukt bereitstellen zu können und nach dem erfindungsgemäße Verfahren vorteilhaft eine Zusammensetzung mit einem hohen Gehalt an 2-Etylhexylsilikat von ≥ 90 Gew.-%, bevorzugt ≥ 95 Gew.-%, zu erhalten.

Daher sind der vorliegenden Erfindung auch Zusammensetzungen mit einem Gehalt an 2-Etylhexylsilikat von ≥ 90 Gew.-%, bevorzugt ≥ 95 Gew.-%, zu entnehmen, die gemäß dem erfindungsgemäßen Verfahren erhältlich sind.

Weiter ist der Erfindung eine Zusammensetzung bzw. erfindungsgemäß hergestellte Zusammensetzung mit einem Gehalt an 2-Etylhexylsilikat von ≥ 90 Gew.-% bevorzugt ≥ 95 Gew.-%, bezogen auf die Zusammensetzung, zu entnehmen. Darüber hinaus weist eine solche Zusammensetzung bzw. erfindungsgemäß hergestellte Zusammensetzung bevorzugt einen Gehalt an Ethanol von ≤ 1 Gew.-%, bevorzugt ≤ 0,5 Gew.-% bis hin zur Nachweisgrenze, bezogen auf die Zusammensetzung, auf und zeichnet sich somit auch aus ökologischer Sicht zusätzlich durch einen nur sehr geringen Anteil an VOC (Volatile Organic Compounds = Flüchtige Organische Verbindungen) aus.

So können erfindungsgemäße Zusammensetzungen zum Beispiel -aber nicht ausschließlich- als Kopplungsreagenz bei der Herstellung von funktionellen Polymeren, wie Butadienkautschuk oder bei Lösungs-Styrol-Butadien-Kautschuk, vorteilhaft eingesetzt werden.

Die vorliegende Erfindung wird durch die nachfolgenden Beispiele näher erläutert, ohne den Gegenstand der Erfindung zu beschränken:

### Beispiele:

### Verwendete Chemikalien:

Dynasylan® 40 (Ethylsilikat), Evonik Resource Efficiency GmbH
Titantetrabutanolat, Sigma-Aldrich
2-Ethylhexanol, Sigma-Aldrich

### Analytische Methoden:

### NMR-Messungen:

Instrument: Bruker
Frequenz: 100,6 MHz(¹³C-NMR)
Scans: 1024 (¹³C-NMR)
Temperatur: 296 K
Lösungsmittel: CDCl₃
Standard: Tetramethylsilan

### Gaschromatographische Bestimmung von Alkohol:

Alle Angaben verstehen sich als Richtwerte. Säulen von ähnlicher Polarität z.B. von anderen Herstellern sind zugelassen. Ist die Trennung nachweislich auch mit einem Gerät mit gepackter Säule erreichbar, ist auch dieses zugelassen.
Bei der Handhabung der Proben ist deren Feuchtigkeitsempfindlichkeit zu beachten.

| | | |
|---|---|---|
| Gerät: | Kapillar-Gaschromatograph mit WLD und Integrator z.B. HP 5890 mit Integrator HP 3396 | |
| Trennsäule: | Kapillarsäule | |
| | Länge: | 25 m |
| | innerer Durchmesser: | 0,20 mm |
| | Filmdicke: | 0,33 mm |
| | stationäre Phase: | HP Ultra 1 |
| Temperaturen: | Säulenofen: | 120 °C - 2 min - 10 °/min - 275 °C - 8 min |
| | Injektor: | 250 °C |
| | Detektor: | 280 °C |
| Trägergas: | Helium | |
| | Strömung: | ca. 1 ml/min |
| | Split-Verhältnis: | ca. 1:100 |
| Injizierte Probe: | 0,4 ml | |

Auswertung erfolgt durch Normierung auf 100 Flächen-%.

### Beispiel 1:

Es wurden Dynasylan® 40 (50 g), 2-Ethylhexanol (100 g) und Titantetrabutanolat (25 µl, 0,05 Gew.-%, bezogen auf die eingesetzte Menge an Dynasylan® 40, vorgelegt und unter Rühren auf 180 °C erwärmt. Dabei entstandenes Ethanol wurde über eine Destillationsbrücke aus dem Reaktionsgemisch entfernt. Es wurde 24 h bei dieser Temperatur gerührt, dann wurde bei Atmosphärendruck 2-Ethylhexanol (Sdp. 182 °C) abdestilliert. Der restliche freie Alkohol wurde bei vermindertem Druck (1 mbar, 100 °C) entfernt. Als Umsetzungsprodukt (105 g) wurde eine leicht gelbliche, leicht viskose Flüssigkeit erhalten. Das Umsetzungsprodukt wurde mittels ¹³C-NMR analysiert. Die Analyse belegt, dass als Umsetzungsprodukt ein 2-Ethylhexylsilikat erhalten wurde. Die Umesterungsausbeute betrug ≥ 95 %, d. h. ≥ 95 % der Ethoxy-Gruppen des eingesetzten Ethylsilikats wurden erfindungsgemäß durch 2-Ethylhexyloxy-Gruppen ersetzt bzw. umgeestert.
¹³C-NMR (100 MHz, CDCl₃): δ = 65.2-66.0 (m, 1C), 41.2-41.8 (m, 1C), 29.7-30.2 (m, 1C), 28.9-29.3 (br s, 1C), 22.7-23-5 (m, 2Cs), 13.9-14.3 (s, 1C), 10.8-11.2 (m, 1C) ppm.

## Patentansprüche

1. Verfahren zur Herstellung einer 2-Ethylhexylsilikat-haltigen Zusammensetzung, indem man Ethylsilikat mit einer im Überschuss eingesetzten Menge an 2-Ethylhexanol in Gegenwart von Titantetrabutanolat als Katalysator unter Durchmischung auf eine Temperatur unterhalb des Siedepunkts von 2-Ethylhexanol erhitzt, reagieren lässt und im Anschluss an die Umsetzung Ethanol und überschüssiges 2-Ethylhexanol durch Destillation aus dem Reaktionsgemisch entfernt und man das Produkt gewinnt.

2. Verfahren nach Anspruch 1,
wobei man Ethylsilikat und 2-Ethylhexanol in einem Gewichtsverhältnis von 1 : 1,1 bis 10 einsetzt, bevorzugt von 1 : 1,5 bis 3, besonders bevorzugt 1 : 2.

3. Verfahren nach Anspruch 1 oder 2,
wobei man 0,01 bis 0,5 Gew.-% Titantetrabutanolat, bezogen auf die eingesetzte Menge an 2-Ethylhexylsilikat, einsetzt, bevorzugt von 0,01 bis 0,1 Gew.-%, besonders bevorzugt 0,05 Gew.-%.

4. Verfahren nach einem der Ansprüche 1 bis 3,
wobei man die Umsetzung bei einer Temperatur von 140 bis 182 °C durchführt, bevorzugt von 170 bis 181 °C, besonders bevorzugt bei 180 °C.

5. Verfahren nach einem der Ansprüche 1 bis 4,
wobei die Umsetzung über einen Zeitraum von 12 bis 60 Stunden durchführt, bevorzugt von 16 bis 48 Stunden.

6. Verfahren nach einem der Ansprüche 1 bis 5,
wobei man die Umesterung mit einer Ausbeute von ≥ 95 % durchführt.

7. Verfahren nach einem der Ansprüche 1 bis 5,
wobei man ein Reaktionsprodukt mit einem Gehalt an 2-Ethylhexylsilikat von ≥ 90 Gew.-% erhält, bevorzugt ≥ 95 %.

## Claims

1. Process for preparing a composition containing 2-ethylhexyl silicate, by heating ethyl silicate with an amount of 2-ethylhexanol used in excess in the presence of titanium tetrabutoxide as catalyst to a temperature below the boiling point of 2-ethylhexanol while mixing, allowing them to react and, after the reaction, removing ethanol and excess 2-ethylhexanol from the reaction mixture by distillation and obtaining the product.

2. Process according to Claim 1,
wherein ethyl silicate and 2-ethylhexanol are used in a weight ratio of 1:1.1 to 10, preferably of 1:1.5 to 3, more preferably 1:2.

3. Process according to Claim 1 or 2,
wherein 0.01% to 0.5% by weight of titanium tetrabutoxide is used, based on the amount of 2-ethylhexyl silicate used, preferably from 0.01% to 0.1% by weight, more preferably 0.05% by weight.

4. Process according to any of Claims 1 to 3,
wherein the reaction is conducted at a temperature of 140 to 182°C, preferably of 170 to 181°C and more preferably at 180°C.

5. Process according to any of Claims 1 to 4,
wherein the reaction is conducted over a period of 12 to 60 hours, preferably of 16 to 48 hours.

6. Process according to any of Claims 1 to 5,
wherein the transesterification is conducted with a yield of ≥ 95%.

7. Process according to any of Claims 1 to 5,
wherein a reaction product having a 2-ethylhexyl silicate content of ≥ 90% by weight is obtained, preferably ≥ 95%.

## Revendications

1. Procédé de fabrication d'une composition contenant du silicate de 2-éthylhexyle, selon lequel du silicate d'éthyle est porté avec une quantité utilisée en excès de 2-éthylhexanol en présence de tétrabutanolate de titane en tant que catalyseur avec mélange à une température inférieure au point d'ébullition du 2-éthylhexanol, laissé réagir, et l'éthanol et le 2-éthylhexanol en excès sont éliminés du mélange réactionnel par distillation après la réaction et le produit est obtenu.

2. Procédé selon la revendication 1, dans lequel le silicate d'éthyle et le 2-éthylhexanol sont utilisés en un rapport en poids de 1:1,1 à 10, de préférence de 1:1,5 à 3, de manière particulièrement préférée de 1:2.

3. Procédé selon la revendication 1 ou 2, dans lequel 0,01 à 0,5 % en poids de tétrabutanolate de titane, par rapport à la quantité utilisée de silicate de 2-éthylhexyle, est utilisé, de préférence 0,01 à 0,1 % en poids, de manière particulièrement préférée 0,05 % en poids.

4. Procédé selon l'une quelconque des revendications 1 à 3, dans lequel la réaction est réalisée à une température de 140 à 182 °C, de préférence de 170 à 181 °C, de manière particulièrement préférée à 180 °C.

5. Procédé selon l'une quelconque des revendications 1 à 4, dans lequel la réaction est réalisée pendant une durée de 12 à 60 heures, de préférence de 16 à 48 heures.

6. Procédé selon l'une quelconque des revendications 1 à 5, dans lequel la transestérification est réalisée avec un rendement ≥ 95 %.

7. Procédé selon l'une quelconque des revendications 1 à 5, dans lequel un produit de réaction ayant une teneur en silicate de 2-éthylhexyle ≥ 90 % en poids, de préférence ≥ 95 % en poids, est obtenu.
